# EUROPEAN PATENT APPLICATION

(11) **EP 4 704 224 A1**
(43) Date of publication of application: **04.03.2026**
(21) Application number: 23935451.7
(22) Date of filing: 18.12.2023
(51) Int. Cl.: H01M 50/103, H01M 50/15, H01M 50/46, H01M 50/54, H01M 50/466, H01M 50/586, H01M 50/595

(54) **BATTERY CELL**

(30) Priority: 26.04.2023 JP 2023072071
(71) Applicant: AESC Japan Ltd., Yokohama-shi, Kanagawa 220-0012 (JP)
(72) Inventor: DAIDOJI, Takao, Zama-shi, Kanagawa 252-0012 (JP); OOKA, Aika, Zama-shi, Kanagawa 252-0012 (JP)
(74) Representative: Mathys & Squire
(86) International application number: PCT/JP2023/045229
(87) International publication number: WO 2024/224680

(57) **Abstract**

The battery cell (10) includes a battery element (100), a front cover member (210) that covers an end surface of the battery element (100), and an exterior film (300) wound around the battery element (100) and the front cover member (210). The front cover member (210) includes at least one corner portion covered with the exterior film (300) and a front protruding portion (214) that protrudes from at least a part of the corner portion. The front protruding portion (214) and the end surface of the battery element (100) are arranged in a direction perpendicular to the end surface of the battery element (100).

## Description

### TECHNICAL FIELD

The present invention relates to a battery cell.

### BACKGROUND ART

In recent years, various battery cells have been developed. The battery cell includes a battery element including a positive electrode, a negative electrode, and a separator. The battery element is sealed with an exterior material.

Patent Document 1 discloses an example of a battery cell. The battery cell includes a cover that covers both end portions of the battery element, and the exterior material that is wound around the battery element and the cover. The cover includes a flat plate facing an end surface of the battery element and a side plate protruding from the flat plate.

Patent Document 2 discloses an example of a battery cell. The battery cell includes a housing that accommodates the battery element, and a cover that covers an end portion of the battery element. The cover includes a protrusion protruding toward the battery element.

### RELATED DOCUMENT

### PATENT DOCUMENT

Patent Document 1: Japanese Unexamined Patent Publication No. 2011-108623
Patent Document 2: Specification of Chinese Utility Model No. 206742372

### SUMMARY OF THE INVENTION

### TECHNICAL PROBLEM

For example, as described in Patent Document 2, the battery element is not accommodated in the housing, but as described in Patent Document 1, the exterior film may be wound around the battery element and the cover member. However, in a case where the exterior film is simply wound around the battery element and the cover member, the exterior film is bent along the corner portion of the cover member. Therefore, it may be difficult to improve the sealing property of the corner portion of the cover member. In addition, in a case where the exterior film is simply wound around the battery element and the cover member, it may be difficult to suppress the displacement of the cover member. For example, the position of the cover member may be shifted due to the cover member being impacted by a factor such as vibration of the vehicle equipped with the battery cell. Alternatively, the position of the cover member may be shifted due to the cover member being pulled toward the battery element by vacuuming during the manufacturing of the battery cell.

An example of a purpose of the present invention is to realize both improving the sealing property of the corner portion of the cover member and suppressing the displacement of the cover member. Other objects of the present invention will become apparent from the description of the present specification.

### SOLUTION TO PROBLEM

An aspect of the present invention is as follows.
[1] A battery cell including:
   a battery element,
   a cover member that covers an end surface of the battery element, and
   an exterior film wound around the battery element and the cover member,
   in which
   the cover member has at least one corner portion that is covered with the exterior film, and a protruding portion at least a part of which protrudes from the corner portion, and
   the protruding portion and the end surface of the battery element are arranged in a direction perpendicular to the end surface of the battery element.
[2]
   The battery cell according to [1], in which the protruding portion and the end surface of the battery element press each other.
[3] The battery cell according to [1], in which the protruding portion is located at the at least one corner portion.
[4] The battery cell according to [1], in which the protruding portion extends along a pair of sides of the cover member that face each other.
[5] The battery cell according to [1], in which the protruding portion extends along all sides of the cover member.
[6] The battery cell according to [4], further including a plurality of current collectors that are drawn out from the battery element,
   in which the plurality of current collectors overlap each other in a direction substantially parallel to the pair of sides.
[7] The battery cell according to any one of [1] to [6], in which an area of a portion of the cover member at which the protruding portion is located is more than or equal to 0.50% and less than or equal to 75% of an entire area of the cover member.
[8] The battery cell according to any one of [1] to [6], in which a thickness of a portion of the cover member at which the protruding portion is located is more than or equal to 1.2 times and less than or equal to 4.0 times a thickness of a portion of the cover member at which the protruding portion is not located.
[9] The battery cell according to any one of [1] to [5], further including a plurality of current collectors that are drawn out from the battery element,
   in which the plurality of current collectors are accommodated in a gap between the end surface of the battery element and a portion of the cover member at which the protruding portion is not located.
[10] The battery cell according to any one of [1] to [5], further including a plurality of current collectors that are drawn out from the battery element, and
   a tab that is electrically connected to the plurality of current collectors,
   in which lengths of the plurality of current collectors are shorter as the plurality of current collectors are closer to the tab.
[11] The battery cell according to any one of [1] to [6],
   in which the battery element has a positive electrode, a negative electrode, and a separator, and
   a part of the separator is located at at least one of between the positive electrode and the protruding portion or between the negative electrode and the protruding portion.
[12] The battery cell according to [11], in which the portion of the separator includes a folded portion that covers an end portion of the positive electrode or the negative electrode.
[13] The battery cell according to any one of [1] to [6], further including an insulating material at least a part of which is located between the protruding portion and the end surface of the battery element.
[14] The battery cell according to any one of [1] to [6],
   in which the protruding portion has a predetermined surface located on a side where the end surface of the battery element is located, and
   at least a part of the predetermined surface is curved.
[15] The battery cell according to any one of [1] to [6], in which
   the protruding portion has a predetermined surface located on a side where the end surface of the battery element is located, and a side surface that extends from the predetermined surface, and
   an intersection portion between the predetermined surface and the side surface is rounded or is oblique with respect to the predetermined surface.
ADVANTAGEOUS EFFECTS OF INVENTION

According to the aspect of the present invention, it is possible to realize both an improvement in sealing property of a corner portion of a cover member and suppression of displacement of the cover member.

### BRIEF DESCRIPTION OF THE DRAWINGS

[FIG. 1] A front perspective view of a battery cell according to an embodiment.
[FIG. 2] A front enlarged perspective view of a part of the battery cell according to the embodiment.
[FIG. 3] A rear perspective view of a front cover member according to the embodiment.
[FIG. 4] A schematic top view of the battery cell according to the embodiment in a state where an exterior film is removed.
[FIG. 5] An enlarged top view of an example of a region between a rear end surface of a front protruding portion of the front cover member and a front end surface of the battery element.
[FIG. 6] A diagram showing a first modification example of FIG. 5.
[FIG. 7] A diagram showing a second modification example of FIG. 5.
[FIG. 8] A rear perspective view of a front cover member according to Modification Example 1.
[FIG. 9] A rear perspective view of a front cover member according to Modification Example 2.
[FIG. 10] A rear perspective view of a front cover member according to Modification Example 3.

### DESCRIPTION OF EMBODIMENTS

Hereinafter, embodiments and modification examples of the present invention will be described with reference to the accompanying drawings. In all drawings, the same constituent elements are denoted by the same reference signs, and detailed description thereof will not be repeated.

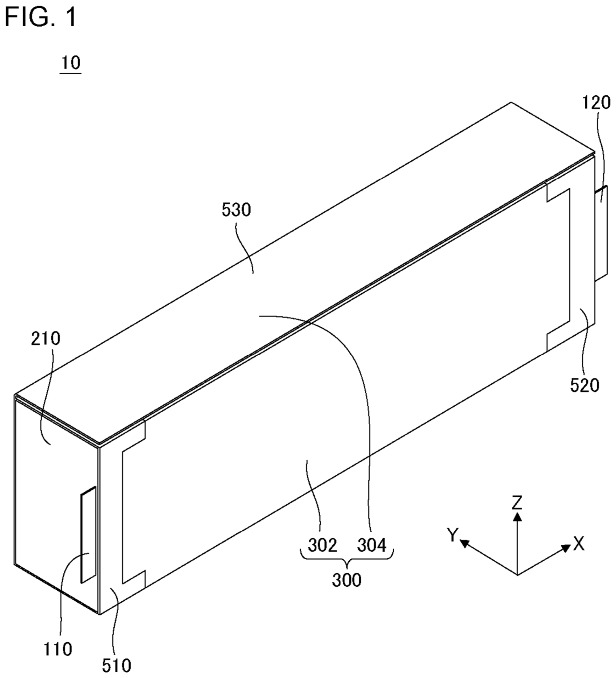

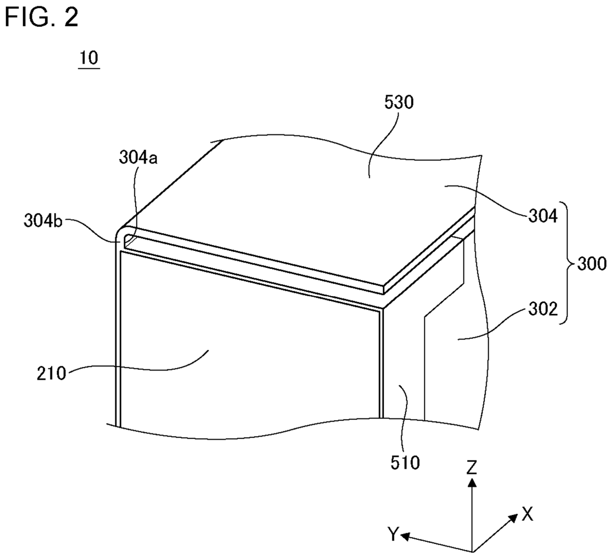

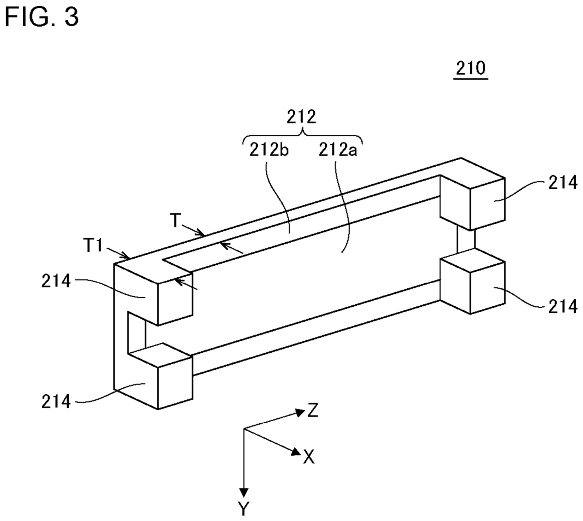

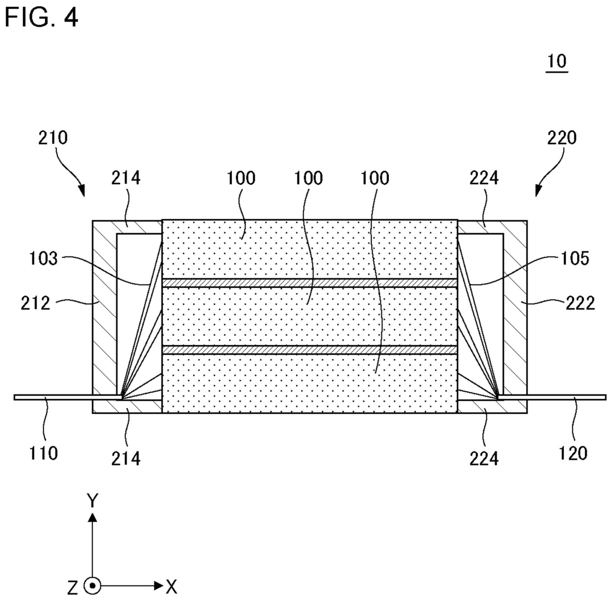

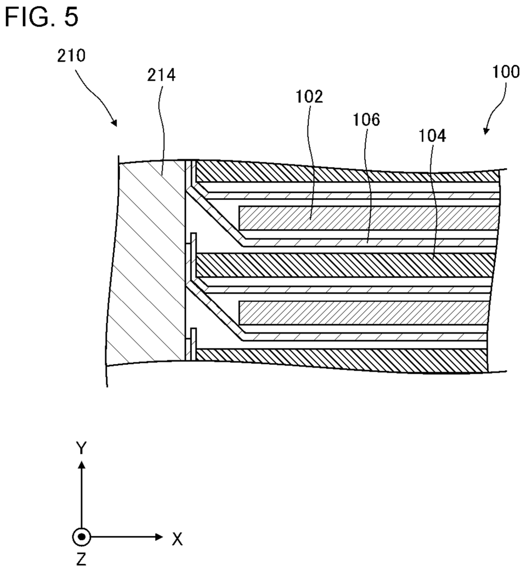

FIG. 1 is a front perspective view of a battery cell 10 according to the embodiment. FIG. 2 is a front enlarged perspective view of a part of the battery cell 10 according to the embodiment. FIG. 3 is a rear perspective view of a front cover member 210 according to the embodiment. FIG. 4 is a schematic top view of the battery cell 10 according to the embodiment in a state in which the exterior film 300 is removed. FIG. 5 is an enlarged top view of an example of a region between a rear end surface of a front protruding portion 214 of the front cover member 210 and a front end surface of the battery element 100.

In each of the drawings, X direction, Y direction, and Z direction are illustrated for description. The X direction indicates a front-rear direction of the battery cell 10. The Y direction is orthogonal to the X direction. The Y direction indicates a left-right direction of the battery cell 10. The Z direction is orthogonal to both the X direction and the Y direction. The Z direction indicates an up-down direction of the battery cell 10. A direction indicated by an arrow indicating the X direction, a direction indicated by an arrow indicating the Y direction, and a direction indicated by an arrow indicating the Z direction are a rear direction, a left direction, and an up direction, respectively. However, the relationship between the X direction, the Y direction, the Z direction, the front-rear direction, the left-right direction, and the up-down direction of the battery cell 10 is not limited to this example. A white circle with a black dot indicating the X direction, the Y direction, or the Z direction indicates that a direction from the back of a paper surface to the front of the paper surface is a direction indicated by an arrow indicating the direction.

The battery cell 10 will be described with reference to FIGS. 1 to 5.

The battery cell 10 comprises a plurality of battery elements 100, a plurality of positive electrode current collectors 103, a plurality of negative electrode current collectors 105, a positive electrode tab 110, a negative electrode tab 120, a front cover member 210, a rear cover member 220, and an exterior film 300. The exterior film 300 has a wound portion 302 and a drawn-out portion 304.

In the embodiment, as shown in FIG. 4, the plurality of battery elements 100 are stacked in the Y direction. Each of the battery elements 100 has a substantially rectangular parallelepiped shape. A longitudinal direction of the battery element 100 is substantially parallel to the X direction. A lateral direction of the battery element 100 is substantially parallel to the Z direction. A thickness direction of the battery element 100 is substantially parallel to the Y direction. However, the shape of the battery element 100 is not limited to this example. The number of battery elements 100 included in the battery cell 10 may be only one. Hereinafter, unless otherwise specified, in the embodiment, the battery cell 10 will be described as comprising a plurality of battery elements 100.

As shown in FIG. 5, the battery element 100 includes at least one positive electrode 102, at least one negative electrode 104, and at least one separator 106. In the example shown in FIG. 5, a plurality of positive electrodes 102 and a plurality of negative electrodes 104 are alternately stacked in the Y direction. At least a part of the separator 106 is located between the positive electrode 102 and the negative electrode 104 adjacent to each other in the Y direction. Specifically, in the example shown in FIG. 5, each of the plurality of sheet-shaped separators 106 is located between the positive electrode 102 and the negative electrode 104 adjacent to each other in the Y direction. However, from the viewpoint of the Z direction, one sheet-shaped separator 106 may be alternately folded at an upper end part of the positive electrode 102 and a lower end part of the negative electrode 104, or alternately folded at a lower end part of the positive electrode 102 and an upper end part of the negative electrode 104. Alternatively, the positive electrode 102, the negative electrode 104, and the separator 106 may be wound such that the separator 106 is disposed between the positive electrode 102 and the negative electrode 104. In one example, the positive electrode 102, the negative electrode 104, and the separator 106 are wound in a state in which both surfaces of one of the positive electrode 102 and the negative electrode 104 are covered with the separator 106. In another example, a laminate including a plurality of unit laminates each including the positive electrode 102, the separator 106, and the negative electrode 104 in this order may be wound. However, the winding structure of the positive electrode 102, the negative electrode 104, and the separator 106 is not limited to these examples.

In the embodiment, the battery cell 10 is a battery cell including an electrolyte. However, the battery cell 10 may be an all-solid-state battery. In the all-solid-state battery, a solid electrolyte layer is provided at a portion corresponding to the separator 106. The all-solid-state battery does not include the electrolyte. Hereinafter, the battery cell 10 will be described as a battery cell including an electrolyte unless otherwise specified.

As shown in FIG. 4, the positive electrode tab 110 is disposed in front of the plurality of battery elements 100. The positive electrode tab 110 penetrates the front cover member 210 in the X direction. A front end part of the positive electrode tab 110 protrudes forward from a front surface of the front cover member 210. A rear end part of the positive electrode tab 110 is electrically connected to the plurality of positive electrodes 102 via the plurality of positive electrode current collectors 103. In the example shown in FIG. 4, the positive electrode tab 110 is located on a right end side of the front cover member 210. However, the positive electrode tab 110 may be located at a substantially central portion of the front cover member 210 in the Y direction.

The plurality of positive electrode current collectors 103 are drawn out from the plurality of positive electrodes 102 toward the front cover member 210. The plurality of positive electrode current collectors 103 overlap with each other in the Y direction. Front end parts of the plurality of positive electrode current collectors 103 are bundled with each other at the rear end part of the positive electrode tab 110. The front end part of each of the plurality of positive electrode current collectors 103 and the rear end part of the positive electrode tab 110 are electrically connected to each other.

In the example shown in FIG. 4, the lengths of the plurality of positive electrode current collectors 103 are shorter as the plurality of positive electrode current collectors 103 are closer to the positive electrode tab 110. Therefore, the excess length of the positive electrode current collector 103 located in the vicinity of the positive electrode tab 110 can be easily shortened as compared to a case where the lengths of the plurality of positive electrode current collectors 103 are the same. Therefore, the positive electrode current collector 103 located in the vicinity of the positive electrode tab 110 can be prevented from being pushed into the battery element 100 as compared to a case where the lengths of the plurality of positive electrode current collectors 103 are the same. Therefore, the positive electrode current collector 103 located in the vicinity of the positive electrode tab 110 can be prevented from being short-circuited to other positive electrode current collectors 103 as compared to a case where the lengths of the plurality of positive electrode current collectors 103 are the same.

As shown in FIG. 4, the negative electrode tab 120 is disposed behind the plurality of battery elements 100. The negative electrode tab 120 penetrates the rear cover member 220 in the X direction. The rear end part of the negative electrode tab 120 protrudes rearward from the rear surface of the rear cover member 220. The front end part of the negative electrode tab 120 is electrically connected to the plurality of negative electrodes 104 through the plurality of negative electrode current collectors 105. In the example shown in FIG. 4, the negative electrode tab 120 is located on a right end side of the rear cover member 220. However, the negative electrode tab 120 may be located at a substantially central portion of the rear cover member 220 in the Y direction.

The plurality of negative electrode current collectors 105 are drawn out from the plurality of negative electrodes 104 to the rear cover member 220. The plurality of negative electrode current collectors 105 overlap each other in the Y direction. The front end parts of the plurality of negative electrode current collectors 105 are bundled together at the front end part of the negative electrode tab 120. The front end parts of the plurality of negative electrode current collectors 105 and the front end part of the negative electrode tab 120 are electrically connected to each other.

In the example shown in FIG. 4, the lengths of the plurality of negative electrode current collectors 105 decrease as the plurality of negative electrode current collectors 105 are closer to the negative electrode tab 120. Therefore, for the same reason as described above, the negative electrode current collector 105 located in the vicinity of the negative electrode tab 120 can be made less likely to be pushed toward the battery element 100 as compared to a case where the lengths of the plurality of negative electrode current collectors 105 are the same.

The front cover member 210 covers the front end surface of the battery element 100. As viewed from the front side, the front cover member 210 has a substantially rectangular shape having a pair of long sides substantially parallel to the Z direction and a pair of short sides substantially parallel to the Y direction. However, the shape of the front cover member 210 is not limited to this example.

The rear cover member 220 covers the rear end surface of the battery element 100. As viewed from the rear side, the rear cover member 220 has a substantially rectangular shape having a pair of long sides substantially parallel to the Z direction and a pair of short sides substantially parallel to the Y direction. However, the shape of the rear cover member 220 is not limited to this example.

As shown in FIGS. 1 and 2, the wound portion 302 has a substantially tubular shape that is open to both the front side and the rear side. The front cover member 210 is disposed inside the front opening of the wound portion 302. The rear cover member 220 is disposed inside the rear opening of the wound portion 302. The wound portion 302 is wound around the battery element 100, the front cover member 210, and the rear cover member 220 in one turn about the X direction. Accordingly, the front cover member 210, the rear cover member 220, and the wound portion 302 form an accommodating space that accommodates the battery element 100, the plurality of positive electrode current collectors 103, and the plurality of negative electrode current collectors 105. The accommodating space accommodates the battery element 100, the plurality of positive electrode current collectors 103, the plurality of negative electrode current collectors 105, and an electrolyte (not shown). It should be noted that the winding aspect of the battery element 100 in the wound portion 302 is not limited to the above-described example.

An outer peripheral surface of the front cover member 210 around the X direction including an outer peripheral surface of the four front protruding portions 214 described below and an inner peripheral surface of the front opening of the wound portion 302 around the X direction are bonded to each other, for example, by thermal welding. Accordingly, a front sealing portion 510 is formed between the outer peripheral surface of the front cover member 210 around the X direction including the outer peripheral surface of the four front protruding portions 214 and the inner peripheral surface of the front opening of the wound portion 302 around the X direction.

An outer peripheral surface of the rear cover member 220 around the X direction including an outer peripheral surface of the four rear protruding portions 224 described below and an inner peripheral surface of the rear opening of the wound portion 302 around the X direction are bonded to each other, for example, by thermal welding. Accordingly, a rear sealing portion 520 is formed between the outer peripheral surface of the rear cover member 220 around the X direction including the outer peripheral surface of the four rear protruding portions 224 and the inner peripheral surface of the rear opening of the wound portion 302 around the X direction.

As shown in FIGS. 1 and 2, as viewed from the front side, the drawn-out portion 304 is drawn out from the upper left corner of the battery element 100 of the wound portion 302. Specifically, as shown in FIG. 2, the drawn-out portion 304 includes a first drawn-out portion 304a and a second drawn-out portion 304b. The first drawn-out portion 304a is drawn out from one end of the wound portion 302 in the circumferential direction around the X direction. The second drawn-out portion 304b is drawn out from the other end of the wound portion 302 in the circumferential direction around the X direction. The first drawn-out portion 304a and the second drawn-out portion 304b are bonded to each other, for example, by thermal welding. Accordingly, a side sealing portion 530 is formed between the first drawn-out portion 304a and the second drawn-out portion 304b as viewed from the front side. The drawn-out portion 304 is bent along the upper surface of the battery element 100. However, the drawn-out portion 304 may not be bent. A bending shape of the drawn-out portion 304 is not limited to the shape according to the embodiment.

The front cover member 210 will be described with reference to FIGS. 3 and 4.

As shown in FIG. 3, the front cover member 210 has a front base material portion 212 and four front protruding portions 214. The front base material portion 212 includes a metal portion 212a and a resin portion 212b.

The front base material portion 212 has a substantially plate shape that is substantially perpendicular to the X direction. The front base material portion 212 has a substantially rectangular shape having a pair of long sides substantially parallel to the Z direction and a pair of short sides substantially parallel to the Y direction. Therefore, the front base material portion 212 has four corner portions covered by the wound portion 302 as viewed in the X direction. In the embodiment, each corner portion of the front base material portion 212 has a substantially right-angled shape. However, each corner portion of the front base material portion 212 may be rounded. At each corner portion of the front base material portion 212, the long side substantially parallel to the Z direction and the short side substantially parallel to the Y direction intersect each other.

The metal portion 212a has a substantially rectangular shape having a pair of long sides substantially parallel to the Z direction and a pair of short sides substantially parallel to the Y direction. The metal portion 212a has conductivity. Therefore, the metal portion 212a can operate as a terminal of the battery element 100. The metal portion 212a is less likely to transmit moisture than the resin portion 212b. Therefore, the moisture blocking property of the front cover member 210 can be improved as compared to a case where the entire front base material portion 212 is composed of the resin portion 212b. However, the entire front base material portion 212 may be composed of the resin portion 212b.

The resin portion 212b surrounds the metal portion 212a around the X direction. Specifically, the resin portion 212b extends along all sides of the metal portion 212a. The resin portion 212b is more likely to be bonded to the wound portion 302 by thermal welding than the metal portion 212a. Therefore, it is possible to easily form the front sealing portion 510 as compared to a case where the entire front base material portion 212 is composed of the metal portion 212a. However, the entire front base material portion 212 may be composed of the metal portion 212a.

The four front protruding portions 214 protrude rearward from the four corner portions of the front base material portion 212. Each front protruding portion 214 is formed of a resin. Each front protruding portion 214 and the resin portion 212b are integrated with each other. In the example shown in FIG. 3, each front protruding portion 214 has a substantially quadrangular prism shape. However, the shape of each front protruding portion 214 is not limited to this example. In the embodiment, the contact area between the outer peripheral surface of the front cover member 210 and the inner peripheral surface of the wound portion 302 at the four corner portions of the front cover member 210 can be increased as compared to a case where the front cover member 210 does not have the four front protruding portions 214. Therefore, in the embodiment, even in a case where the wound portion 302 is bent along the corner portions of the front cover member 210, the sealing property of the corner portions of the front cover member 210 can be improved as compared to a case where the front cover member 210 does not have the four front protruding portions 214.

As shown in FIG. 4, the rear end surface of each front protruding portion 214 and the front end surface of the battery element 100 are substantially parallel to the X direction. That is, the rear end surface of each front protruding portion 214 and the front end surface of the battery element 100 are arranged in a direction perpendicular to the front end surface of the battery element 100. Specifically, the rear end surface of each front protruding portion 214 and the front end surface of the battery element 100 are substantially parallel to the X direction and are pressed against each other. Therefore, as compared to a case where the rear end surface of each front protruding portion 214 and the front end surface of the battery element 100 are shifted from each other in a direction perpendicular to the X direction as viewed from the X direction, the displacement of the front cover member 210 in the X direction can be suppressed. For example, even in a case where the front cover member 210 is impacted by a factor such as vibration of the vehicle on which the battery cell 10 is mounted, the displacement of the front cover member 210 in the X direction can be suppressed. In this case, the pressing of the positive electrode current collector 103 into the battery element 100 due to the displacement of the front cover member 210 in the X direction can be suppressed. Therefore, the short-circuit of the battery element 100 due to the pressing of the positive electrode current collector 103 into the battery element 100 can be suppressed. In addition, even in a case where the front cover member 210 is attracted toward the battery element 100 by vacuuming during the manufacturing of the battery cell 10, the displacement of the front cover member 210 in the X direction can be suppressed.

As shown in FIG. 4, a gap in which the plurality of positive electrode current collectors 103 are accommodated is present between the front end surface of the battery element 100 and the rear surface of the front base material portion 212. The dimension of the gap in the X direction can be adjusted according to the magnitude of the rearward shift of the rear end surface of the front protruding portion 214 with respect to the rear surface of the front base material portion 212. Therefore, the dimension of the gap in the X direction in which the plurality of positive electrode current collectors 103 are accommodated can be easily adjusted as compared to a case where the front cover member 210 does not have each front protruding portion 214.

In the embodiment, as shown in FIG. 3, the four front protruding portions 214 are partially located at four corner portions of the front cover member 210. In other words, the front protruding portions 214 are not located on each side of the front protruding portions 214, except for the four corner portions. Therefore, the thickness T of the portion of the front cover member 210 where the four front protruding portions 214 are not located in the X direction is thinner than the thickness T1 of the portion of the front cover member 210 where the four front protruding portions 214 are positioned in the X direction. Therefore, the front cover member 210 can be lightened as compared to a case where the front protruding portions 214 extend along all sides of the front cover member 210. In addition, the gap between the two front protruding portions 214 adjacent to each other in the Y direction or the Z direction can also function as a space for accommodating the electrolyte.

In the embodiment, the front protruding portions 214 are not located on a pair of long sides of the front cover member 210, except for the corner portions of the front cover member 210. Therefore, the front protruding portions 214 can be suppressed from pressing the positive electrode current collectors 103 located at both ends in the Y direction toward the battery element 100 as compared to a case where the front protruding portions 214 extend along the pair of long sides of the front cover member 210.

The total area S1 of the portions of the front cover member 210 where the four front protruding portions 214 are positioned in a direction perpendicular to the X direction is, for example, more than or equal to 0.50% and less than or equal to 75% of the entire area S of the front cover member 210 in a direction perpendicular to the X direction. In a case where the ratio S1/S is in the above-described range, it is easier to ensure the contact area between the outer peripheral surface of the front cover member 210 and the inner peripheral surface of the wound portion 302 at each corner portion of the front cover member 210, as compared to a case where the ratio S1/S is smaller than the lower limit of the above-described range. In a case where the ratio S1/S is in the above-described range, it is easier to ensure the area of the gap existing between the front end surface of each battery element 100 and the rear surface of the front base material portion 212 in a direction perpendicular to the X direction, as compared to a case where the ratio S1/S is larger than the upper limit of the above-described range.

The thickness T1 of each portion of the front cover member 210 where the front protruding portions 214 are located in the X direction is, for example, more than or equal to 1.2 times and less than or equal to 4.0 times the thickness T of a portion of the front cover member 210 where the front protruding portions 214 are not located in the X direction. In a case where the ratio T1/T is in the above-described range, it is easier to ensure the dimension of the gap existing between the front end surface of each battery element 100 and the rear surface of the front base material portion 212 in the X direction, as compared to a case where the ratio T1/T is smaller than the lower limit of the above-described range, and thus the space utilization of the inside of the battery cell 10 can be improved. In a case where the ratio T1/T is in the above-described range, the dimension of the battery cell 10 in the X direction can be reduced as compared to a case where the ratio T1/T is larger than the upper limit of the above-described range.

In the embodiment, the rear end surface of each front protruding portion 214 is a flat surface substantially perpendicular to the X direction. However, at least a part of the rear end surface of each front protruding portion 214 may be curved. For example, the rear end surface of each front protruding portion 214 may have a ripple shape. The pressure applied by the rear end surface of each front protruding portion 214 to the front end surface of the battery element 100 can be adjusted according to the curved shape of the rear end surface of each front protruding portion 214.

As shown in FIG. 4, the rear cover member 220 includes a rear base material portion 222 and four rear protruding portions 224 in the same manner as the front cover member 210. The structure of the rear cover member 220 can be the same as the structure described for the front cover member 210.

Next, an example of a region between the rear end surface of the front protruding portion 214 and the front end surface of the battery element 100 will be described with reference to FIG. 5.

In the example shown in FIG. 5, the front end part of each separator 106 is bent toward the left side. Therefore, the front end part of each separator 106 at least partially covers the front end part of each positive electrode 102 or the front end part of each negative electrode 104 from the front side. Therefore, the front end part of each separator 106 is located between the front end part of the positive electrode 102 and the rear end surface of the front protruding portion 214 and between the front end part of the negative electrode 104 and the rear end surface of the front protruding portion 214. Therefore, the short-circuit of the positive electrode 102 and the negative electrode 104 due to the pressing of the rear end surface of the front protruding portion 214 can be easily suppressed as compared with a case where the front end part of each positive electrode 102 and the front end part of each negative electrode 104 are exposed forward without being covered by the separator 106. In the example shown in FIG. 5, the length of the excess portion of the front end part of each separator 106, that is, the length of the portion of each separator 106 that is located in front of the front end part of the positive electrode 102 and the length of the portion of each separator 106 that is located in front of the negative electrode 104 are lengths that can reliably at least partially cover the front end part of each positive electrode 102 and the front end part of each negative electrode 104 from the front side.

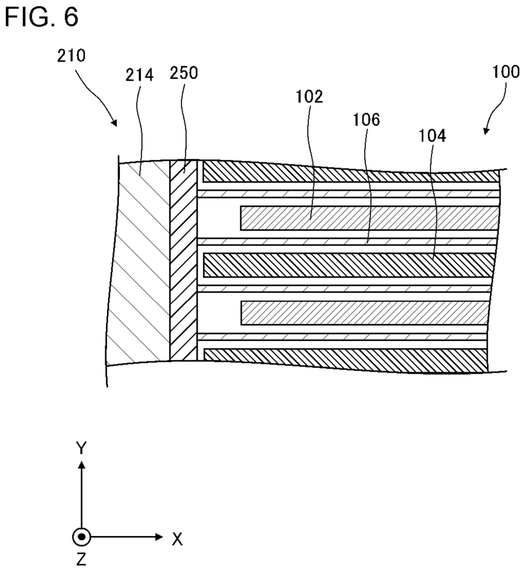

FIG. 6 is a diagram showing a first modification example of FIG. 5.

In the example shown in FIG. 6, an insulating material 250 is located between the front end surface of the battery element 100 and the rear end surface of the front protruding portion 214. The insulating material 250 is, for example, an insulating tape. Therefore, the short-circuit of the positive electrode 102 and the negative electrode 104 due to the pressing of the rear end surface of the front protruding portion 214 can be easily suppressed as compared with a case where the insulating material 250 is not provided.

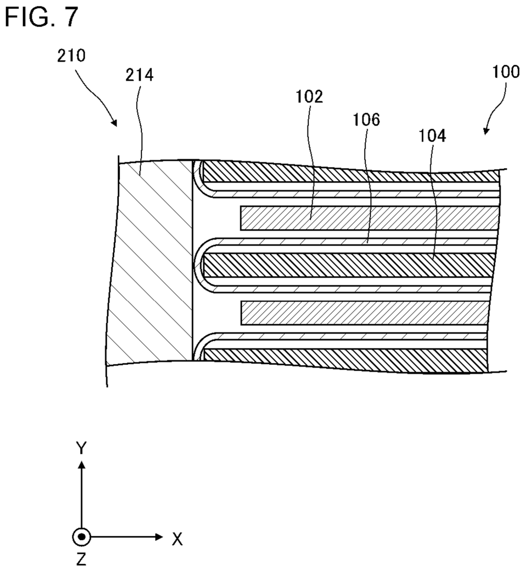

FIG. 7 is a diagram showing a second modification example of FIG. 5.

In the example shown in FIG. 7, from the Z direction, the separator 106 is alternately folded back at the rear end part of each positive electrode 102 and the front end part of each negative electrode 104. As described with reference to FIG. 5, the plurality of positive electrode current collectors 103 are drawn out from the battery element 100 forward, and the plurality of negative electrode current collectors 105 are drawn out from the battery element 100 rearward. Therefore, even in a case where the folded portion on the front side of the separator 106 and the folded portion on the rear side of the separator 106 cover the front end part of each negative electrode 104 and the rear end part of each positive electrode 102, respectively, the plurality of positive electrode current collectors 103 and the plurality of negative electrode current collectors 105 can be drawn out from the battery element 100 forward and rearward, respectively.

As shown in FIG. 7, the folded portion on the front side of the separator 106 covers the front end part of each negative electrode 104. Therefore, the folded portion on the front side of the separator 106 is positioned between the front end surface of the battery element 100 and the rear end surface of the front protruding portion 214, and is located between the front end part of the negative electrode 104 and the rear end surface of the front protruding portion 214. Therefore, the short-circuit of the positive electrode 102 and the negative electrode 104 due to the pressing of the rear end surface of the front protruding portion 214 can be easily suppressed as compared with a case where the front end part of each negative electrode 104 is exposed forward without being covered by the separator 106. Similarly to the example shown in FIG. 7, the folded portion on the rear side of the separator 106 covers the rear end part of each positive electrode 102. Therefore, the short-circuit of the positive electrode 102 and the negative electrode 104 due to the pressing of the front end surface of the rear protruding portion 224 can be easily suppressed as compared with a case where the rear end part of each positive electrode 102 is exposed rearward without being covered by the separator 106.

Next, an example of a method of manufacturing the battery cell 10 according to the embodiment will be described. In this example, the battery cell 10 according to the embodiment is manufactured as follows.

First, the battery element 100 is manufactured. The battery element 100 includes at least one positive electrode 102, at least one negative electrode 104, and at least one separator 106. A plurality of positive electrode current collectors 103 and a plurality of negative electrode current collectors 105 are drawn out from the battery element 100.

Next, the positive electrode tab 110 and the front cover member 210 are bonded to each other. Similarly, the negative electrode tab 120 and the rear cover member 220 are bonded to each other. Next, the positive electrode tab 110 and the plurality of positive electrode current collectors 103 are bonded to each other. Similarly, the negative electrode tab 120 and the plurality of negative electrode current collectors 105 are bonded to each other. However, the positive electrode tab 110 and the plurality of positive electrode current collectors 103 may be bonded to each other, and then the positive electrode tab 110 and the front cover member 210 may be bonded to each other. Similarly, the negative electrode tab 120 and the plurality of negative electrode current collectors 105 may be bonded to each other, and then the negative electrode tab 120 and the rear cover member 220 may be bonded to each other.

Next, the exterior film 300 is wound around the battery element 100, the front cover member 210, and the rear cover member 220 in one turn about the X direction. As a result, the wound portion 302 is formed. In addition, the extra length of the exterior film 300 is drawn out as the drawn-out portion 304.

Next, the outer peripheral surface of the front cover member 210 around the X direction including the outer peripheral surfaces of the four front protruding portions 214 and the inner peripheral surface of the front opening of the wound portion 302 around the X direction are bonded to each other by thermal welding. Therefore, the front sealing portion 510 is formed between the outer peripheral surface of the front cover member 210 around the X direction and the inner peripheral surface of the front opening of the wound portion 302 around the X direction. Next, the outer peripheral surface of the rear cover member 220 around the X direction including the outer peripheral surfaces of the four rear protruding portions 224 and the inner peripheral surface of the rear opening of the wound portion 302 around the X direction are bonded to each other by thermal welding. Therefore, the rear sealing portion 520 is formed between the outer peripheral surface of the rear cover member 220 around the X direction and the inner peripheral surface of the rear opening of the wound portion 302 around the X direction. In this state, the front cover member 210, the rear cover member 220, and the wound portion 302 form an accommodating space that accommodates the battery element 100, the plurality of positive electrode current collectors 103, and the plurality of negative electrode current collectors 105.

Next, the electrolyte is injected into the accommodating space through a gap between the first drawn-out portion 304a and the second drawn-out portion 304b. Next, the accommodating space is vacuumed through the gap between the first drawn-out portion 304a and the second drawn-out portion 304b. Next, the first drawn-out portion 304a and the second drawn-out portion 304b are bonded to each other by thermal welding to form the side sealing portion 530. Therefore, the accommodating space is vacuum-sealed. In the embodiment, even in a case where the front cover member 210 is pulled toward the battery element 100 by the vacuuming, the displacement of the front cover member 210 in the X direction can be suppressed by each of the front protruding portions 214. The same applies to the rear cover member 220.

A method of vacuum-sealing the accommodating space is not limited to the above-described example. In another example, first, the first drawn-out portion 304a and the second drawn-out portion 304b are bonded to each other by thermal welding to form the side sealing portion 530. Next, the electrolyte is injected into the accommodating space through the liquid injection hole provided in at least one of the front cover member 210 or the rear cover member 220. Next, the accommodating space is vacuumed through the liquid injection hole. Next, the liquid injection hole is blocked by a predetermined cover member.

Next, the side sealing portion 530 is bent along the upper surface of the battery element 100.

In this way, the battery cell 10 is manufactured.

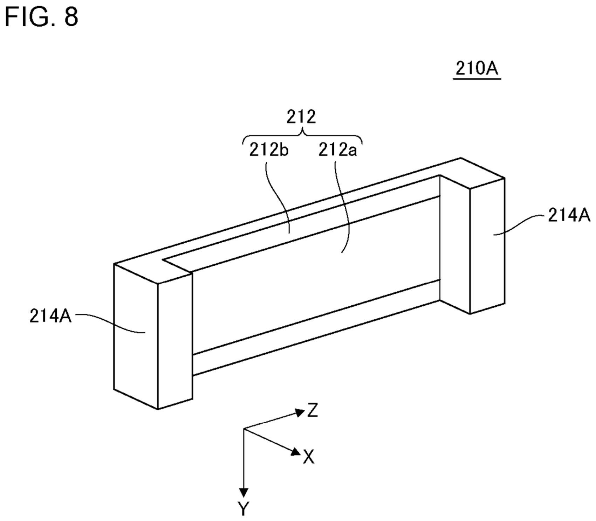

FIG. 8 is a rear perspective view of a front cover member 210A according to Modification Example 1. The front cover member 210A according to Modification Example 1 is the same as the front cover member 210 according to the embodiment, except for the following points.

The front cover member 210A according to Modification Example 1 includes the front base material portion 212 and two front protruding portions 214A. The two front protruding portions 214A extend along a pair of short sides of the front base material portion 212 that are substantially parallel to the Y direction. Therefore, the two front protruding portions 214A face each other in the Z direction. The front protruding portions 214A are not located on a pair of long sides of the front base material portion 212 that are substantially parallel to the Z direction, excluding corner portions of the front base material portion 212. Therefore, the thickness of the front cover member 210A in the X direction in a portion in which the two front protruding portions 214A are not located is smaller than the thickness of the front cover member 210A in the X direction in a portion in which the two front protruding portions 214A are located.

In Modification Example 1, the contact area between the rear end surface of the front protruding portion 214A and the front end surface of the battery element 100 can be increased as compared with the embodiment. Therefore, in Modification Example 1, the pressure exerted on the front end surface of the battery element 100 by the front protruding portion 214A can be reduced as compared with the embodiment.

In Modification Example 1, as in the embodiment, the front protruding portion 214A is not located on a pair of long sides of the front cover member 210A, excluding corner portions of the front cover member 210A. In Modification Example 1, as in the embodiment, the plurality of positive electrode current collectors 103 overlap each other in the Y direction. Therefore, it is possible to suppress the pressing of the positive electrode current collector 103, which is located on both ends of the front protruding portion 214A in the Y direction, toward the battery element 100 as compared with a case where the front protruding portion 214A extends along the pair of long sides of the front cover member 210A.

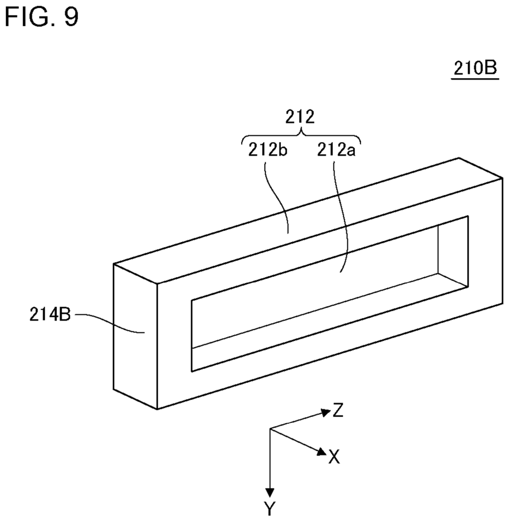

FIG. 9 is a rear perspective view of a front cover member 210B according to Modification Example 2. The front cover member 210B according to Modification Example 2 is the same as the front cover member 210 according to the embodiment, except for the following points.

The front cover member 210B according to Modification Example 2 includes a front base material portion 212 and a front protruding portion 214B. The front protruding portion 214B extends along all sides including the pair of long sides and the pair of short sides of the front cover member 210B. Therefore, in Modification Example 2, the contact area between the rear end surface of the front protruding portion 214B and the front end surface of the battery element 100 can be increased as compared with the embodiment and Modification Example 1. Therefore, in Modification Example 2, the pressure received by the front end surface of the battery element 100 from the front protruding portion 214B can be relaxed as compared with the embodiment and Modification Example 1.

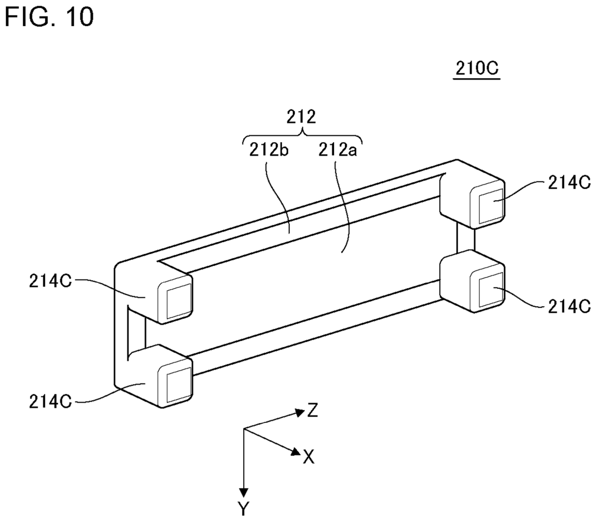

FIG. 10 is a rear perspective view of a front cover member 210C according to Modification Example 3. The front cover member 210C according to Modification Example 3 is the same as the front cover member 210 according to the embodiment, except for the following points.

The front cover member 210C according to Modification Example 3 includes a front base material portion 212 and four front protruding portions 214C. Each front protruding portion 214C has a substantially quadrangular prism shape with chamfered edges. Specifically, each front protruding portion 214C includes a rear end surface that is substantially perpendicular to the X direction and four side surfaces that extend forward from the peripheral edge of the rear end surface and are substantially parallel to the X direction. A corner portion of the intersection portion between the rear end surface and each side surface of each front protruding portion 214C and a corner portion of the intersection portion between side surfaces of the front protruding portions 214C intersecting each other are chamfered. Therefore, in the example shown in FIG. 10, the intersection portion between the rear end surface of each front protruding portion 214C and each side surface and the intersection portion between side surfaces of the front protruding portions 214C intersecting each other are rounded. Therefore, the pressure applied by the rear end surface of each front protruding portion 214 to the front end surface of the battery element 100 can be relaxed as compared with a case where the intersection portion between the rear end surface of each front protruding portion 214C and each side surface is a right angle. A method of rounding the corner portion of the front protruding portion 214C is not limited to chamfering. The intersection portion between side surfaces of the front protruding portions 214C intersecting each other may be a right angle.

The shape of the corner portion of the front cover member 210C is not limited to the example shown in FIG. 10. For example, the intersection portion between the rear end surface of each front protruding portion 214C and each side surface may be oblique with respect to the rear end surface of each front protruding portion 214C by chamfering at 45°. An angle of the intersection portion with respect to the rear end surface of each front protruding portion 214C may be 45° or may be different from 45°. In a case where the intersection portion between the rear end surface of each front protruding portion 214C and each side surface is oblique with respect to the rear end surface of each front protruding portion 214C, the pressure applied by the rear end surface of each front protruding portion 214 to the front end surface of the battery element 100 can be relaxed as compared with a case where the intersection portion between the rear end surface of each front protruding portion 214C and each side surface is a right angle. The intersection portion between side surfaces of the front protruding portions 214C intersecting each other may also be oblique with respect to both side surfaces of the front protruding portions 214C intersecting each other. A method of forming the corner portions of each front protruding portion 214C is not limited to chamfering at 45°.

Although the embodiments and modification examples of the present invention have been described above with reference to the accompanying drawings, these are merely examples of the present invention, and various other configurations may be employed.

For example, in the embodiment, the rear end surface of each front protruding portion 214 and the front end surface of the battery element 100 are in contact with each other and are directly pressed against each other in a direction substantially parallel to the X direction. However, the rear end surface of each front protruding portion 214 and the front end surface of the battery element 100 may be pressed against each other in a direction substantially parallel to the X direction in a state where a spacer such as an insulator is disposed between the rear end surface of each front protruding portion 214 and the front end surface of the battery element 100.

The rear end surface of each front protruding portion 214 and the front end surface of the battery element 100 may face each other in a direction substantially parallel to the X direction through a gap. That is, the rear end surface of each front protruding portion 214 and the front end surface of the battery element 100 may not be in contact with each other. Even in a case where the rear end surface of each front protruding portion 214 and the front end surface of the battery element 100 face each other in a direction substantially parallel to the X direction through a gap, the displacement of the front cover member 210 in the X direction can be limited to a length of the gap between the rear end surface of each front protruding portion 214 and the front end surface of the battery element 100 in the X direction. Therefore, the pressing of the positive electrode current collector 103 into the battery element 100 due to the displacement of the front cover member 210 in the X direction can be suppressed as compared to a case where the front protruding portion 214 is located to be deviated to the outside of the front end surface of the battery element 100 as viewed in the X direction.

For example, in the embodiment, the positive electrode tab 110 and the negative electrode tab 120 are disposed on opposite sides of the battery element 100 in the X direction. However, both the positive electrode tab 110 and the negative electrode tab 120 may be disposed on only one of the front side or the rear side of the battery element 100 in the X direction. In this case, the front end part and the rear end part of the battery element 100 are covered with, for example, two cover members. Alternatively, only the side of the battery element 100 from which the positive electrode tab 110 and the negative electrode tab 120 are drawn out may be covered with the cover member. In this example, on a side of the battery element 100 opposite to the cover member, the exterior film 300 may be sealed and folded along the battery element 100.

In the present specification, the terms of approximation such as "substantially", "about", and "essentially" mean a range in which the intended purpose is achieved by a state of an element, which is understood by those skilled in the art in a case of modifying the state of the element. For example, "substantially parallel" may mean, depending on the context, not only a state of being perfectly parallel but also a state of being deviated by a predetermined angle of greater than or equal to -10° and less than or equal to +10°, greater than or equal to -5.0° and less than or equal to +5.0°, and the like from the perfect parallel. "Substantially perpendicular" may mean, depending on the context, not only a state of being perfectly perpendicular but also a state of being deviated by a predetermined angle of greater than or equal to -10° and less than or equal to +10°, greater than or equal to -5.0° and less than or equal to +5.0°, and the like from the perfect perpendicular. "Substantially right angle" may mean, depending on the context, not only a state of being perfectly right angle but also a state of being deviated by a predetermined angle of greater than or equal to -5.0° and less than or equal to +5.0°, greater than or equal to -2.5° and less than or equal to +2.5°, and the like from the perfect right angle.

This application claims priority based on Japanese Patent Application No. 2023-072071 filed on April 26, 2023, the entire disclosure of which is incorporated herein by reference.

### REFERENCE SIGNS LIST

- 10: battery cell
- 100: battery element
- 102: positive electrode
- 103: positive electrode current collector
- 104: negative electrode
- 105: negative electrode current collector
- 106: separator
- 110: positive electrode tab
- 120: negative electrode tab
- 210, 210A, 210B, 210C: front cover member
- 212: front base material portion
- 212a: metal portion
- 212b: resin portion
- 214, 214A, 214B, 214C: front protruding portion
- 220: rear cover member
- 222: rear base material portion
- 224: rear protruding portion
- 250: insulating material
- 300: exterior film
- 302: wound portion
- 304: drawn-out portion
- 304a: first drawn-out portion
- 304b: second drawn-out portion
- 510: front sealing portion
- 520: rear sealing portion
- 530: side sealing portion

## Claims

1. A battery cell comprising:
a battery element;
a cover member that covers an end surface of the battery element; and
an exterior film wound around the battery element and the cover member,
wherein the cover member has at least one corner portion that is covered with the exterior film, and a protruding portion at least a part of which protrudes from the corner portion, and
the protruding portion and the end surface of the battery element are arranged in a direction perpendicular to the end surface of the battery element.

2. The battery cell according to Claim 1, wherein the protruding portion and the end surface of the battery element press each other.

3. The battery cell according to Claim 1, wherein the protruding portion is located at the at least one corner portion.

4. The battery cell according to Claim 1, wherein the protruding portion extends along a pair of sides of the cover member that face each other.

5. The battery cell according to Claim 1, wherein the protruding portion extends along all sides of the cover member.

6. The battery cell according to Claim 4, further comprising:
a plurality of current collectors that are drawn out from the battery element,
wherein the plurality of current collectors overlap each other in a direction substantially parallel to the pair of sides.

7. The battery cell according to any one of Claims 1 to 6, wherein an area of a portion of the cover member at which the protruding portion is located is more than or equal to 0.50% and less than or equal to 75% of an entire area of the cover member.

8. The battery cell according to any one of Claims 1 to 6, wherein a thickness of a portion of the cover member at which the protruding portion is located is more than or equal to 1.2 times and less than or equal to 4.0 times a thickness of a portion of the cover member at which the protruding portion is not located.

9. The battery cell according to any one of Claims 1 to 5, further comprising:
a plurality of current collectors that are drawn out from the battery element,
wherein the plurality of current collectors are accommodated in a gap between the end surface of the battery element and a portion of the cover member at which the protruding portion is not located.

10. The battery cell according to any one of Claims 1 to 5, further comprising:
a plurality of current collectors that are drawn out from the battery element; and
a tab that is electrically connected to the plurality of current collectors,
wherein lengths of the plurality of current collectors are shorter as the plurality of current collectors are closer to the tab.

11. The battery cell according to any one of Claims 1 to 6, wherein the battery element has a positive electrode, a negative electrode, and a separator, and
a part of the separator is located at at least one of between the positive electrode and the protruding portion or between the negative electrode and the protruding portion.

12. The battery cell according to Claim 11, wherein the portion of the separator includes a folded portion that covers an end portion of the positive electrode or the negative electrode.

13. The battery cell according to any one of Claims 1 to 6, further comprising an insulating material at least a part of which is located between the protruding portion and the end surface of the battery element.

14. The battery cell according to any one of Claims 1 to 6,
wherein the protruding portion has a predetermined surface located on a side where the end surface of the battery element is located, and
at least a part of the predetermined surface is curved.

15. The battery cell according to any one of Claims 1 to 6,
wherein the protruding portion has a predetermined surface located on a side where the end surface of the battery element is located, and a side surface that extends from the predetermined surface, and
an intersection portion between the predetermined surface and the side surface is rounded or is oblique with respect to the predetermined surface.
